**Europäisches Patentamt**

(19) **European Patent Office**

**Office européen des brevets**

(11) Numéro de publication: **0 128 810**
**B1**

(12) **FASCICULE DE BREVET EUROPEEN**

(45) Date de publication du fascicule du brevet:
**17.11.88**

(51) Int. Cl.⁴: **B 62 J 9/00,** B 62 J 7/08

(21) Numéro de dépôt: **84401110.6**

(22) Date de dépôt: **30.05.84**

(54) **Dispositif de bagage pour motocyclettes ou similaires.**

(30) Priorité: **02.06.83 FR 8309140**

(43) Date de publication de la demande:
**19.12.84 Bulletin 84/51**

(45) Mention de la délivrance du brevet:
**17.11.88 Bulletin 88/46**

(84) Etats contractants désignés:
**DE GB IT**

(56) Documents cités:
**DE - A - 3 226 445**
**FR - A - 2 487 273**
**US - A - 2 229 756**
**US - A - 4 260 084**
**US - A - 4 266 703**

(73) Titulaire: **Dumoulin, Gilles, 12, rue Alfred,**
**F-92140 Clamart (FR)**

(72) Inventeur: **Lebaron, Richard, 9, rue Brantôme,**
**F-75003 Paris (FR)**
Inventeur: **Dumoulin, Gilles, 12, rue Alfred,**
**F-92140 Clamart (FR)**

(74) Mandataire: **Picard, Jean-Claude Georges et al, Cabinet**
**Plasseraud 84, rue d'Amsterdam, F-75009 Paris (FR)**

ACTORUM AG

## Description

La présente invention concerne les bagages destinés à être transportés sur le porte-bagages d'une motocyclette ou similaire, ainsi que la fixation de ceux-ci sur un tel porte-bagages.

Les motocyclistes, et les utilisateurs d'engins similaires, ont de plus en plus couramment l'habitude de placer leurs bagages, ou autres objets à transporter, à l'intérieur de petits coffrets rigides fixés sur le porte-bagages de l'engin utilisé. En effet de tels coffrets présentent des avantages incontestables par rapport aux sacoches utilisées jadis pour le même usage.

Dans la majorité des cas les coffrets ainsi employés sont fixés de façon amovible, au moyen de sangles ou similaires, sur le porte-bagages d'une motocyclette. Il suffit donc à l'utilisateur de retirer ces moyens de fixation pour pouvoir prendre à la main le coffret correspondant, ce qui lui permet de transporter aisément les objets contenus dans celui-ci. Toutefois cette solution présente un grave inconvénient, à savoir le fait qu'en cas d'abandon d'une motocyclette sur un lieu de stationnement, il est nécessaire de prendre avec soi le coffret de transport afin d'éviter tout risque de vol de celui-ci, même si ce coffret est vide. Par ailleurs la fixation d'un tel coffret au moyen de sangles ou similaires constitue une solution peu pratique et tout à fait inesthétique.

C'est la raison pour laquelle il a déjà été proposé des coffrets de transport spécialement agencés pour être fixés sur des porte-bagages de motocyclettes ou analogues, et qui comportent à cet effet des moyens de fixation convenablement adaptés, et éventuellement un système de verrouillage. Cependant les coffrets de ce genre, qui ont été réalisés jusqu'ici, ainsi que leurs systèmes de fixation, sont peu pratiques. Par ailleurs les coffrets correspondants présentent un aspect inesthétique en raison de la présence visible des moyens prévus pour leur fixation, et éventuellement pour leur verrouillage.

C'est pourquoi la présente invention a pour but de réaliser un dispositif de bagage pour motocyclette, comportant un coffret de transport qui peut être fixé en place très facilement et qui présente l'aspect esthétique normal d'un coffret portatif.

Ce dispositif comporte un coffret tel que défini dans le préambule de la revendication 1. Un tel coffret est déjà connu de US-A-2 229 756.

Cependant le présent dispositif se différencie par les mesures faisant l'objet de la partie caractérisante de la revendication 1.

Ainsi le coffret de transport du présent dispositif peut être très facilement et rapidement fixé en place ou retiré, et après mise en place, sa fixation est optimum. Cependant ce coffret présente néanmoins l'aspect esthétique normal d'un coffret portatif, car les rainures du système d'assemblage à glissière se trouvent dissimulées, puisqu'elles sont situées sur les côtés de la partie en retrait prévue sur la place inférieure du coffret.

Selon une autre caractéristique, les rebords et rainures du système d'assemblage du coffret de transport sur l'embase de fixation, s'étendent dans le sens longitudinal et il est prévu une butée arrêtant le mouvement de coulissement du coffret lors de sa mise en place, quand celui-ci a atteint sa position définitive.

Selon une autre caractéristique encore, le coffret de transport est constitué par deux coques identiques entre elles et dont les grandes faces présentent chacune deux rainures susceptibles de recevoir les rebords longitudinaux de l'embase de fixation du présent dispositif.

Cependant d'autres particularités et avantages du dispositif selon l'invention apparaîtront au cours de la description suivante. Celle-ci est donnée en référence au dessin annexé à simple titre indicatif, et sur lequel:

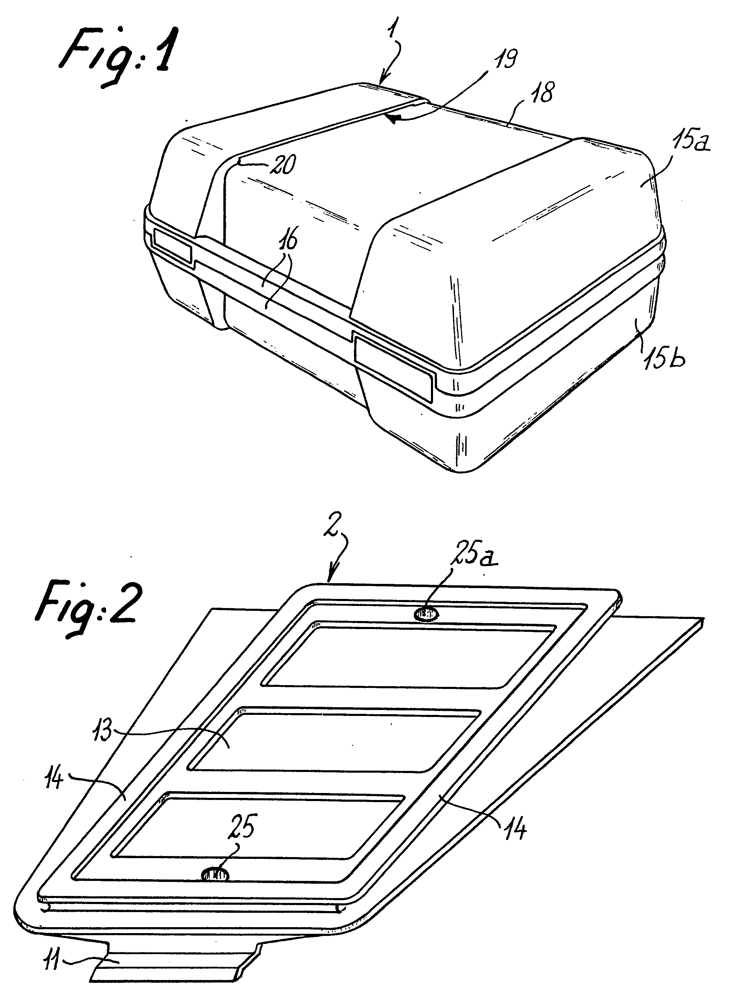

Les figures 1 et 2 sont des vues en perspective, à échelle différente, des deux éléments constitutifs du présent dispositif, à savoir: d'une part le coffret de transport prévu dans celui-ci et d'autre part l'embase destinée à recevoir ce coffret;

La figure 3 est une vue en perspective d'un porte-bagages de motocyclette sur lequel est rapporté deux embases de fixation selon l'invention, un seul coffret de transport étant représenté en traits mixtes au-dessus de l'embase fixée sur la plate-forme supérieure de ce porte-bagages;

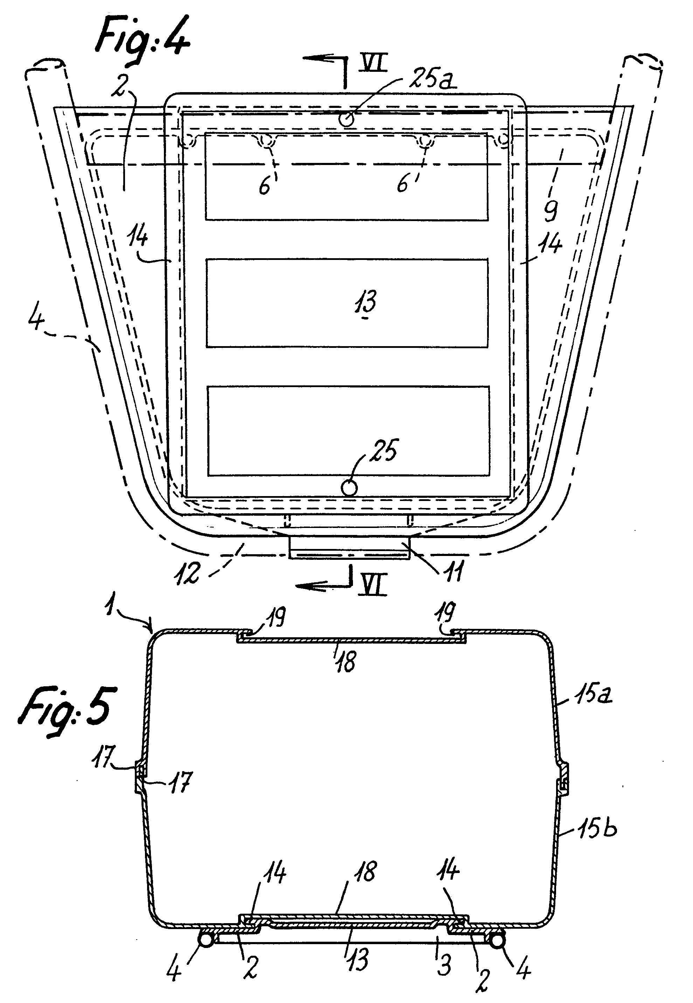

La figure 4 est une vue en plan de dessus d'une embase de fixation faisant partie du présent dispositif;

La figure 5 est une vue en coupe verticale, selon un plan transversal, du coffret de transport du présent dispositif; celui-ci étant représenté après fixation sur l'embase correspondante;

La figure 6 est une vue en coupe selon la ligne VI–VI de la figure 4, mais à échelle différente;

La figure 7 est une vue partielle en coupe, selon un même plan de coupe, mais à échelle différente, cette vue illustrant le mode de verrouillage du coffret de transport du présent dispositif sur l'embase de fixation correspondante.

Comme déjà indiqué, le dispositif selon l'invention comprend deux éléments complémentaires, à savoir:

– un coffret de transport 1 et une embase de fixation 2 destinée à recevoir un tel coffret. Dans l'exemple représenté, cette embase est constituée par une plaque de contour trapézoïdal dont la face inférieure comporte une jupe 3 de même contour, disposée en retrait par rapport à la périphérie de cette plaque.

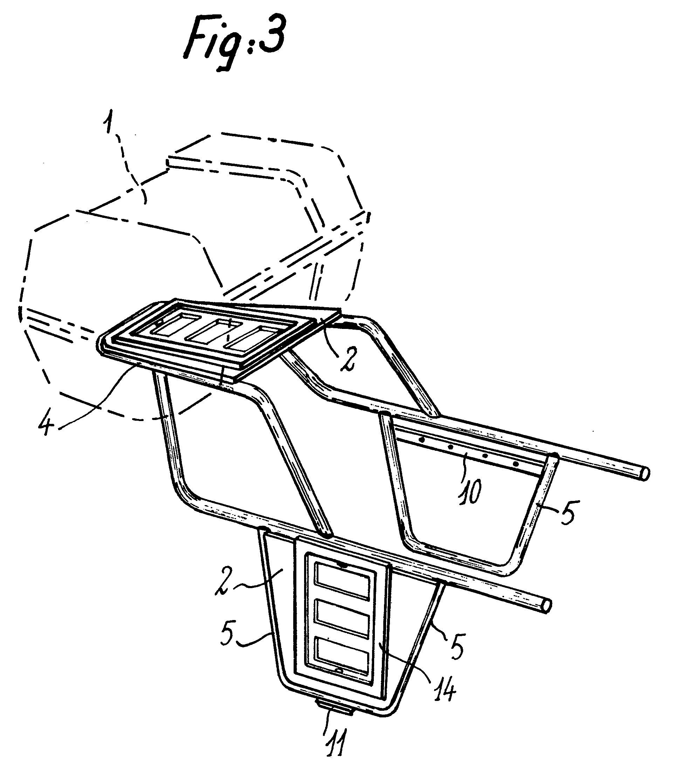

Dans ces conditions celle-ci peut être encastrée entre les côtés de la plate-forme supérieure 4 d'un porte-bagages de motocyclette, tel que celui représenté à la figure 3.

Cependant, comme illustré sur la même figure, cette embase peut également être disposée verticalement et encastrée à l'intérieur de l'un et l'autre des arceaux renversés 5 existant sur les côtés de ce même porte-bagages et qui sont habituellement destinés à servir de supports de fixation pour des sacoches latérales.

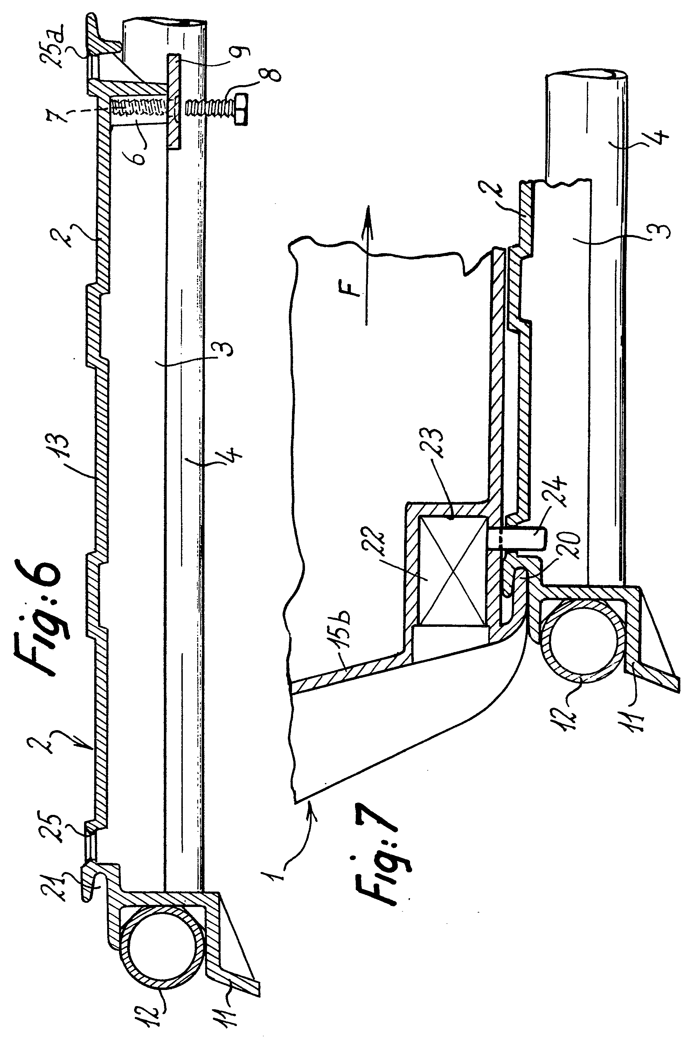

Le long de la grande base de cette embase, la jupe 3 de celle-ci comporte, sur sa face interne, des protubérances 6 à l'intérieur desquelles sont prévus des alésages taraudés 7. Ceux-ci sont susceptibles de recevoir des vis de fixation 8 engagées à travers des trous ménagés dans la traverse horizontale 9 de la plate-forme supérieure du porte-bagages (voir figure 6). D'une façon similaire, lorsqu'une telle embase est fixée contre un arceau latéral 5, sa fixation est assurée au moyen de vis vissées dans ces mêmes alésages 7, après avoir été engagées dans des trous prévus dans une traverse supérieure 10, ou dans des pattes verticales prévues à la partie supérieure de l'arceau correspondant.

A son extrémité opposée, l'embase 2 comporte une patte coudée 11 susceptible d'être emboîtée sur le côté arrière 12 de la plate-forme supérieure 4 du porte-bagages correspondant (voir figure 6). Cependant lorsque cette même embase est fixée verticalement contre un arceau latéral 5, cette patte est emboîtée autour de la branche inférieure de ce dernier, comme représenté à la figure 3.

Dans l'un et l'autre cas, l'embase ainsi prévue est donc parfaitement solidarisée avec la partie correspondante du porte-bagages. Or cette embase est destinée à servir de support au coffret de transport 1 faisant partie du présent dispositif.

La fixation de ce coffret sur cette embase est assurée par un système d'assemblage à glissière qui est constitué par des rebords et rainures correspondantes. En l'occurrence, l'embase 2 comporte une partie 13 en surélévation, de contour rectangulaire, et dont les côtés longitudinaux présentent des rebords 14 faisant saillie vers l'extérieur. Quant au coffret de transport 1, il présente sur sa face inférieure des rainures susceptibles de recevoir les rebords saillants 14 ainsi prévus sur l'embase 2.

Ce coffret est constitué par deux coques identiques 15a et 15b reliées l'une à l'autre par une charnière (non représentée), située du côté opposé à celui à l'endroit duquel est prévue une poignée de préhension 16 formée par deux barrettes complémentaires portées par l'une et l'autre de ces deux coques. Les bords de celles-ci présentent des lèvres 17 qui s'emboîtent les unes dans les autres de façon à assurer une excellente fermeture (voir figure 5).

Sur leur grande face, chacune des coques 15a et 15b présente une partie 18 qui s'étend en retrait par rapport au niveau de cette face. Or les côtés longitudinaux de cette partie en retrait présentent chacun une rainure 19 apte à recevoir l'un des rebords saillants 14 de l'embase 2 de fixation. En réalité, seules les rainures 19 de la coque inférieure 15b sont destinées à recevoir ces rebords saillants. En effet les rainures 19 de la coque supérieure 15a n'ont aucune utilité, en ce qui concerne la fixation initiale entre le coffret et l'embase de la motocyclette, mais elles existent du fait que dans un but de réduction du prix de revient du présent coffret, les deux coques 15a et 15b sont absolument identiques et fabriquées par moulage en résine synthétique avec un même moule.

Du fait de l'agencement ainsi prévu, le coffret de transport 1 peut être fixé sur l'embase 2 par un simple mouvement de coulissement dans le sens de la flèche F (voir figure 7), après avoir présenté les rainures 19 de sa coque inférieure 15b en regard des rebords saillants 14 de cette embase. Cependant ce mouvement de coulissement est stoppé par une butée d'arrêt, lorsque ce coffret est venu occuper sa position définitive au-dessus de l'embase de fixation 2. Cette butée peut être constituée par une languette 20 prévue à l'extrémité arrière des rainures 19 et qui vient buter dans le fond d'une rainure 21 prévue sur le bord arrière de l'embase 2 (voir figure 7).

Cependant il est également prévu un système de verrouillage destiné à interdire tout retrait intempestif du coffret de transport 1. Ce système est constitué par un verrou 22 disposé à l'intérieur d'un logement 23 ménagé à l'extrémité inférieure de la coque inférieure 15b du coffret. Ce verrou comporte un pêne saillant 24 susceptible de venir s'engager à l'intérieur d'un trou 25, prévu à l'arrière de l'embase 2, et qui sert ainsi de gâche pour ce pêne (voir figures 6 et 7).

Pour démonter le coffret 1 il suffit de le faire coulisser sur l'embase de fixation 2 dans le sens opposé de la flèche F après avoir escamoté le pêne 24 du verrou 22. Ce coffret peut donc ensuite être utilisé pour transporter à la main les bagages contenus dans celui-ci.

Cependant, dans le cas où l'utilisateur n'a pas besoin de transporter avec lui les objets contenus dans ce coffret, il peut parfaitement laisser celui-ci en place sans aucun risque de vol. En effet le verrou 22 interdit toute possibilité de démontage intempestif de ce coffret.

Ainsi qu'il a déjà été indiqué, l'embase 2 du présent dispositif peut être fixée à demeure, non seulement sur la plate-forme supérieure 4 d'un porte-bagages tel que celui représenté à la figure 3, mais également sur les arceaux latéraux 5 de celui-ci. Il est donc possible de fixer un coffret de transport 1 sur chaque côté du porte-bagages en montant ces deux coffrets sur les embases correspondantes. Dans un tel cas ces coffrets sont orientés de façon que leurs poignées de transport 16 se trouvent disposées vers le haut. C'est la raison pour laquelle les embases 2 comportent un second trou 25a, susceptible de servir de gâche pour le pêne 24 du verrou 22, et qui est situé près de la grande base de ces embases.

Au total on peut donc monter, sur un même porte-bagages, trois coffrets de transports distincts.

Mais il est également possible de monter seulement deux coffrets latéraux et aucun coffret supérieur, ou inversement.

Bien entendu le dispositif selon l'invention n'est pas limité au seul exemple de réalisation qui a été décrit ci-dessus et représenté sur le dessin annexé à simple titre indicatif. Ainsi l'embase de fixation 2 pourrait éventuellement présenter une forme autre que celle prévue dans cet exemple et qui est spécialement conçue pour un porte-bagages du type de celui représenté à la figure 3. Eventuellement cette embase pourrait comporter une forme rectangulaire et être conçue pour être assujettie sur un porte-bagages quelconque, par l'intermédiaire de pattes de fixation ou tous autres organes appropriés. Mais bien entendu dans un tel cas, cette embase continuerait à comporter des rebords longitudinaux 14 faisant saillie à l'extérieur et destinés à s'engager dans les rainures 19 d'un coffret de transport selon l'invention.

Quant à ce coffret il peut comporter lui-même une forme différente. Ainsi au lieu de présenter la forme d'un coffret relativement haut, il pourrait affecter la forme d'une malette plate ou d'un porte-documents. Du reste un des avantages importants du dispositif selon l'invention réside dans le fait que le coffret de transport, faisant partie de celui-ci, peut présenter la forme d'un coffret ou d'un porte-documents classique, si l'on fait exception des rainures 19. Cependant la présence de celles-ci n'est pratiquement pas visible compte-tenu de leur localisation à l'endroit des côtés de la partie en retrait 18 de chaque coque du coffret. Du reste l'existence de cette partie en retrait a plutôt pour effet d'améliorer l'aspect esthétique de ce coffret. Dans ces conditions l'utilisateur dispose d'un bagage d'aspect classique qu'il peut transporter avec lui et utiliser sans inconvénient dans diverses circonstances. A ce sujet il convient aussi de noter que du fait de la forme de ses faces externes, le coffret de transport selon l'invention peut être posé à plat sur une table, ou tout autre support, comme un bagage classique.

Ainsi qu'il a déjà été indiqué, les deux coques constituant ce coffret sont avantageusement fabriquées par moulage en résine synthétique. Il en est de même pour l'embase de fixation 2.

## Revendications

1. Dispositif de bagages pour motocyclettes ou similaires, comportant un coffret (1) susceptible d'être fixé de façon amovible sur une embase (2) elle-même fixée à demeure sur la plate-forme supérieure (4) d'un porte-bagages de motocyclette, la fixation de ce coffret (1) étant assurée par l'intermédiaire d'un système de glissières (14, 19) et d'un système de verrouillage (22, 25), dans lequel le coffret de transport (1) est constitué par deux coques (15a, 15b) reliées par une charnière et présentant une partie (18) en retrait sur les côtés de laquelle sont prévues des rainures (19) s'étendant dans le sens longitudinal et susceptibles de recevoir des rebords (14) prévus sur les côtés de l'embase (2) de ce dispositif (1), lorsque la coque (15a, 15b) correspondante est placée contre cette embase (2) pour la fixation du coffret (1) sur celle-ci, l'extrémité arrière du coffret (1) comportant par ailleurs une butée (20) susceptible de venir buter contre l'extrémité arrière de l'embase (2) pour arrêter le mouvement de coulissement du coffret lors de sa mise en place, quand celui-ci a atteint sa position définitive, caractérisé en ce que lesdites deux coques (15a, 15b) sont identiques et que chacune de ces coques présente, sur sa grande face, une partie en retrait (18) dont les côtés longitudinaux comportent chacun une rainure (19) apte à recevoir l'un des rebords (14) de l'embase (2) du dispositif.

2. Dispositif selon la revendication 1, caractérisé en ce que la butée portée par l'extrémité arrière du coffret de transport (1) consiste en une languette (20) cependant que le bord arrière de l'embase (2) de fixation comporte une rainure (21) destinée à recevoir cette languette.

3. Dispositif selon l'une des revendications 1 et 2, caractérisé en ce que le coffret de transport (1) comporte, à l'une de ses extrémités, un verrou (22) pourvu d'un pène saillant (24) susceptible de s'engager dans une gâche (25 ou 25a) de l'embase de fixation.

4. Dispositif selon l'une des revendications précédentes caractérisé en ce que l'embase de fixation 2 est agencée pour pouvoir être fixée indifféremment soit sur la plate-forme supérieure (4) d'un porte-bagages de motocyclette, soit sur les côtés latéraux (5) d'un tel porte-bagages.

## Claims

1. Luggage device for motorcycles or similar, consisting of a box (1) capable of being fixed in a removable manner to a base (2), itself permanently fixed to the upper platform (4) of a motorcycle luggage-rack, this box (1) being fixed by means of a system of slides (14, 19) and a locking system (22, 25), in which the carriage box (1) consists of two shells (15a, 15b) connected by a hinge and having an indented part (18) on the sides of which grooves (19) are provided extending in a longitudinal direction and capable of receiving the raised edges (14) on the sides of the base (2) of this device (1) when the corresponding shell (15a, 15b) is placed against this base (2) for fixing the box (1) onto it, the rear end of the box (1) additionally having a stop (20) capable of coming up against the rear end of the base (2) to check the movement of the box when it is slid into its final position, characterised by the fact that the said two shells (15a, 15b) are identical and that each shell has, on its outside, an indented part (18) the longitudinal sides of which each contain a groove (19) capable of receiving one of the raised edges (14) of the base (2) of the device.

2. Device according to claim 1, characterised by the fact that the stop on the rear end of the carriage box (1) consists of a tongue (20), whilst the rear edge of the attachment base (2) has a groove (21) intended to receive this tongue.

3. Device according to either of claims 1 or 2, characterised by the fact that the carriage box (1) has, at one end, a lock (22) with a projecting bolt (24) capable of engaging with a keeper (25 or 25a) in the attachment base.

4. Device according to any of the previous claims, characterised by the fact that the attachment base (2) is arranged to be able to be fixed as required either to the upper platform (4) of a motorcycle luggage-rack, or to the sides (5) of such a luggage-rack.

## Patentansprüche

1. Gepäckeinrichtung für Motorräder oder dergleichen, bestehend aus einem kofferartigen Behälter (1), der abnehmbar an einer Auflage (2) angebracht werden kann, die seinerseits dauernd auf der oberen Plattform (4) des Gepäckträgers eines Motorrades befestigt ist, wobei die Anbringung des Behälters (1) mittels eines Systems von Führungsbahnen (14, 19) und eines Verriegelungssystems (22, 25) erfolgt und der Transportbehälter (1) aus zwei Schalen (15a, 15b) besteht, die mittels eines Scharniers miteinander verbunden sind und einen zurückspringenden Abschnitt (18) enthalten, an dessen Seiten Nuten (19) vorgesehen sind, die sich in Längsrichtung erstrecken und Randleisten (14) aufnehmen können, die an den Seiten der Auflage (2) der Vorrichtung vorgesehen sind, wenn die entsprechende Schale (15a, 15b) auf die Auflage (2) geschoben wird, um den Behälter (1) daran zu befestigen und wobei das hintere Ende des Behälters (1) darüber hinaus einen Anschlag (20) enthält, der gegen das hintere Ende der Auflage (2) zur Anlage kommt, um die Verschiebung des Behälters (1) während seiner Anbringung zu arretieren, wenn er seine endgültige Lage erreicht hat, dadurch gekennzeichnet, dass die beiden Schalen (15a, 15b) identisch sind und dass jede der beiden Schalen auf ihrer grossen Oberfläche mit einem zurückspringenden Abschnitt (18) versehen ist, dessen in Längsrichtung verlaufende Seiten jeweils eine Nut (19) aufweisen, die geeignet ist, eine der Leisten (14) der Auflage (2) der Vorrichtung aufzunehmen.

2. Vorrichtung nach Anspruch 1, dadurch gekennzeichnet, dass der Anschlag, der am hinteren Ende des Transportbehälters (1) vorgesehen ist, aus einer Zunge (20) besteht, während die hintere Kante des Befestigungsrahmens (2) mit einer Nut (21) versehen ist, die dazu dient, diese Zunge aufzunehmen.

3. Vorrichtung nach einem der Ansprüche 1 und 2, dadurch gekennzeichnet, dass der Transportbehälter (1) an einem seiner Enden eine Verriegelung (22) enthält, die aus einem vorspringenden Riegel (24) besteht, der in eine Verschlussöffnung (25 oder 25a) der Befestigungsauflage einfallen kann.

4. Vorrichtung nach einem der vorhergehenden Ansprüche, dadurch gekennzeichnet, dass die Befestigungsauflage (2) so ausgebildet ist, dass sie in gleicher Weise sowohl an der oberen Plattform (4) des Gepäckträgers eines Motorrades als auch an dessen Seitenflächen (5) anbringbar ist.

0 128 810

Fig:1

Fig:2

7

# Fig:3

**Fig:4**

**Fig:5**

Fig:6

Fig:7

0 128 810